# EUROPEAN PATENT APPLICATION

(11) **EP 0 854 591 A2**
(43) Date of publication of application: **22.07.1998**
(21) Application number: 98300362.5
(22) Date of filing: 20.01.1998
(51) Int. Cl.: H04B 7/185

(54) **Multi-service terrestrial and satellite telephone system and method**

(30) Priority: 21.01.1997 GB 9701140
(71) Applicant: ICO Services Ltd., London W6 9BN (GB)
(72) Inventor: Hui, Kelly, London, W6 9BN (GB)
(74) Representative: Read, Matthew Charles

(57) **Abstract**

A telephone system has access both to a terrestrial radio telephone service 19 23 21 25 and to a satellite telephone service 3 5 13. In the event that no terrestrial service 19 23 21 25 is available, an equipment identifier 69 in the handset 1 permits the ground portion 5 13 of the satellite service to accept calls from the handset 1 and to establish a call basis, by display of questions on the handset display 35 and acceptance of responses from the handset keypad 33, if no basis already exists. The system permits more than one identifiable user per handset 1 and flexibility in establishment of the call basis. The system can use the equipment identifier 69 to recognise the style of handset and adapt its protocols accordingly.

## Description

The present invention relates to telephone systems and a method for their operation, and especially to mobile satellite telephone systems where a handset or user terminal has access to more than one service and is adapted to roaming between services, one of the services comprising satellite communications. It particularly relates to a method a system where the user terminal may be unable to contact other than the satellite communications service.

It is well known for a traveller to have a mobile telephone so that he may remain in communication while away from base. Different service providers allow "roaming" between each others' services. For example, a digital telephone whose home provider is, for example, based in Germany, may be allowed to be used in France and vice versa, the service providers having a mutual agreement for geographical transfer of subscribers. Not all mobile telephones can be used between countries, and even those mobile telephones which can be used between some countries cannot be used in all countries. It is therefore advantageous for the traveller to use a satellite communication mobile telephone with which he is able to remain in contact no matter where he may be in the world.

The present invention proposes to employ a method and system whereby the owner of a mobile telephone handset or user terminal, in those circumstances where use of a local radio telephone network is impossible, may still attain global communications.

Equally, the owner of a mobile radio telephone handset or user terminal may discover that his local subscription service has no arrangement with the satellite service provider, thereby precluding access. The present invention seeks to provide a method and system whereby transfer to the satellite service is possible even though no arrangement previously exists and the potential subscriber is unknown to the satellite service provider.

According to one aspect, the present invention consists in a satellite communication system comprising a user terminal and a ground portion, said user terminal being operative to exchange messages with said ground portion through a satellite, said system being characterised by said user terminal comprising an equipment identifier, indicative of compatibility of said user terminal with said ground portion; by said user terminal, at commencement of communication with said ground portion, being operative to send said equipment identifier to said ground portion; by said ground portion being operative to examine said equipment identifier; and by said ground portion being operative to continue said communication if said equipment identifier indicates that said user terminal is compatible with said ground portion.

According to another aspect, the present invention consists in a method for operating a satellite communication system comprising a user terminal and a ground portion, said user terminal being operative to exchange messages with said ground portion through a satellite, said method being characterised by comprising the steps of: allocating, to said user terminal comprising an, equipment identifier, indicative of compatibility of said user terminal with said ground portion; said user terminal, at commencement of communication with said ground portion, sending said equipment identifier to said ground portion; said ground portion examining said equipment identifier; and said ground portion continuing said communication if said equipment identifier indicates that said user terminal is compatible with said ground portion.

The invention further provides a method and system, wherein said user terminal is additionally operative to send, to said ground portion, a unique identifier, indicative of that handset alone from among a plural set of handsets; wherein said ground station is operative to receive said unique identifier, and, if said equipment identifier indicates compatibility of said handset with said ground portion, to request said user terminal to send, to said ground portion, a personal identifier; wherein said ground portion is operative to examine the received personal identifier; and wherein said ground portion is operative is operative to continue said communication if said received personal identifier matches a stored personal identifier associated with said received unique identifier.

The present invention still further provides a method and system wherein said unique identifier is derived from a subscriber identity module, or can be integral with said equipment identifier.

The present invention further provides a method and system wherein said ground portion is operative to store a plurality of personal identifiers, associated with said unique identifier.

The present invention further provides a method and system wherein said ground portion is operative to compare said received unique identifier with a plurality of stored unique identifiers and, if a match is found, to continue said communication on the basis of services, stored in association with that one of said plurality of stored unique identifiers for which a match was found with said received unique identifier.

The present invention further provides a method and system wherein, in the event that said ground portion cannot find a stored personal identifier which matches a received personal identifier, said ground portion is operative to interact with said user terminal to establish a basis for continued communication, said ground portion, in the event that a basis is found, being operative to allocate a new personal identifier for storage in association with said received unique identifier and indication of said basis.

The present invention further provides a method and system, wherein said interaction includes said ground portion sending messages for display by said user terminal and said user terminal sending, as a response to said ground portion, replies from a keypad on said user terminal.

The present invention further provides a method and system wherein said received equipment identifier includes indication of the style of said user terminal, wherein said ground portion is operative to examine said received equipment identifier for indication of said style, and wherein said ground portion is operative to respond to said indication of said style by selecting and utilising that protocol, from among a plurality of protocols, appropriate to said style.

The present invention further provides a method and system wherein said user terminal is operative to communicate with at least one non satellite communication system, said user terminal selecting said at least one non-satellite system by default, and selecting said satellite system in response to a command by a user.

The invention is further explained, by way of a preferred example, by the following description, taken in conjunction with the appended drawings, in which:
Figure 1 is a schematic drawing of the overall environment in which the present invention is implemented;
Figure 2 is a projected view of the user terminal or handset of the present invention;
Figure 3 is a block diagram of the functional elements of the handset of Figure 2;
Figure 4 is an expanded schematic diagram of the controlling processor of Figure 3;
Figure 5 is flowchart of activities of the ground portion; and
Figure 6 is an expanded flowchart showing, in detail, the manner of establishment of a call basis, given, in less detail, in Figure 5.

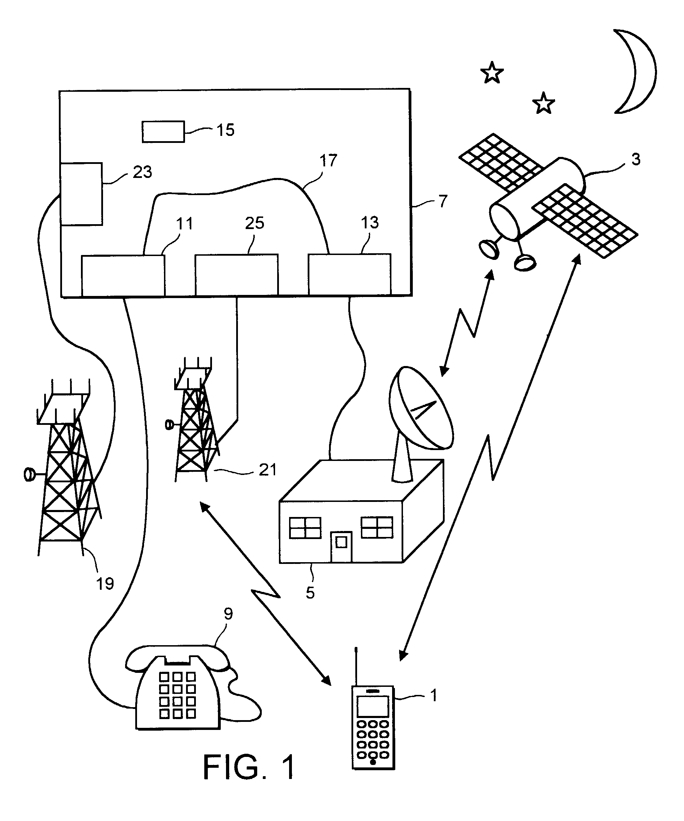

Attention is drawn to Figure 1, being a diagram of the system which encompasses the present invention.

A mobile telephone handset 1 is in two-way radio communication with a satellite 3, forming the sky portion of the system, which, in turn, is in two-way radio communication with a satellite earth station 5, which, together with any ancillary control equipment, forms the ground portion of the system. By means of the satellite 3, the earth station 5 can pass messages to and receive message from the mobile telephone handset 1 and the mobile telephone handset 1 can pass messages to and receive messages from the satellite earth station 5.

The terrestrial telephone system 7, comprising the agglomeration of all of the switching systems, cables, microwave links, fibre-optic links and so on, joined together in the world, is shown here in simple rectangular outline merely to be generally representative thereof. Access to the terrestrial telephone system 7 is gained via gateways. Gateways can include public switched telephone networks (PSTN), public switched digital networks (PSDN), cellular telephone systems, satellite communications systems, and so on.

In Figure 1, merely for sake of illustration, an ordinary telephone 9 has, as its gateway into the terrestrial system 7, a public switched telephone network 11. Likewise, the satellite earth station 5 has access to the terrestrial telephone system 7 via a satellite gateway 13.

Let us say, by way of example, that the ordinary telephone 9 wishes to communicate with the mobile telephone handset 1. The public switched telephone network 11 first locates, within the terrestrial system the home location register 15 which is uniquely dedicated to the particular mobile telephone handset 1 which is being called. The home location register 15 automatically knows that the mobile telephone handset 1 may be reached through the satellite gateway 13. The public switched telephone network 11 then sets up a two-way communication line 17, within the terrestrial telephone system 7, to join the public switched telephone network 11 and the satellite gateway 13. From that point on the call can proceed as normal. When the call terminates, the public switched telephone network 11 discontinues the two-way communication line 17.

The ordinary telephone 9, for the purpose of the previous example, could equally well have been replaced by a terrestrial mobile telephone, such as GSM or DAMPS, or could have been another satellite mobile telephone operating through its own satellite gateway. The ordinary telephone 9, as previously described, was merely exemplary.

The terrestrial telephone system 7 comprises cellular radio telephone systems 19, 21 which are joined to the terrestrial system 7 via their respective gateways 23, 25. The handset 1, in the embodiment of the present invention, is a dual-mode handset, selectably capable of communication with the satellite 3 or with either of the cellular radio systems 19, 21.

The handset 1 is normally used with a first "home" cellular radio service 19. By way of example, it is deemed that the second cellular radio service 21 is in another country or geographical area. If the providers of the first 19 and second 21 cellular radio services have a mutual agreement, the handset may "roam" between countries or geographical areas and continue use as if nothing had changed, the billing going back to the user via the "home" cellular radio telephone service 19. On the other hand, if no such agreement exists, mutual permission is denied and the handset 1 may be used only in the home cellular radio telephone service 19.

Equally, an agreement can exist between the providers of the cellular radio telephone services 19, 21 and the providers of the satellite communications service 3, 5, 13. Roaming between the two then becomes possible by mutual permission. If such an agreement does not exist, roaming between terrestrial cellular telephone networks 19, 21 and satellite communications services 3, 5, 13 becomes as impossible as roaming between mutually exclusive terrestrial cellular telephone services. It is this problem which the present invention seeks to solve, together with improving the nature of roaming between satellite communications services 3 5 13 and terrestrial cellular radio telephone services 19, 21.

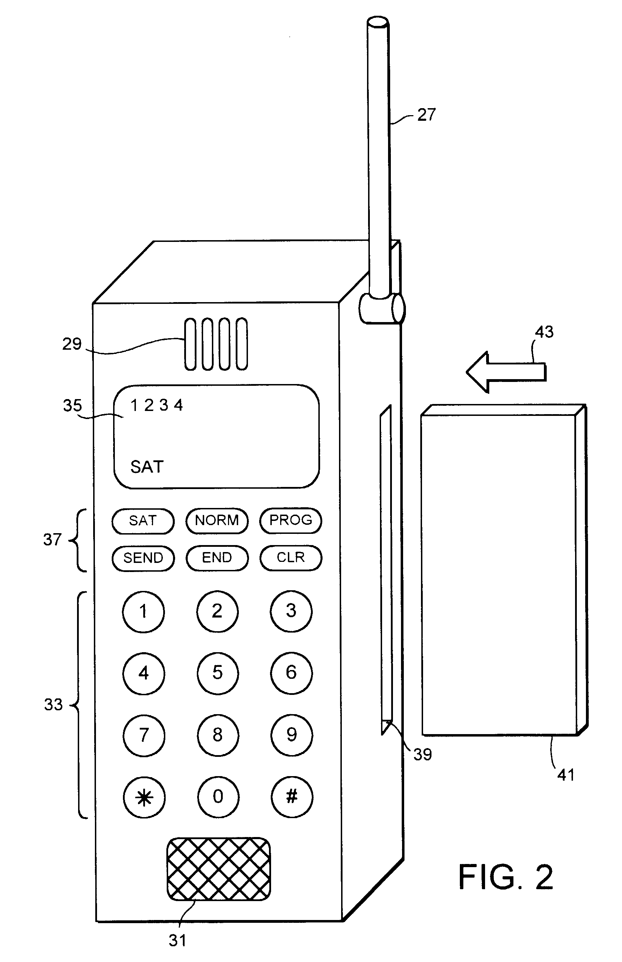

Attention is drawn to Figure 2, showing external details of a user terminal 1 in the form of a handset.

The radio telephone handset 1 comprises an antenna 27, an earpiece 29, a microphone 31, a keyboard 33 and a display 35. In addition to the usual buttons found on the keyboard 33, service selection buttons 37 are also provided. In the example given, although the user terminal 1 reverts to its "home" provided service if it is available, the buttons 37 may selectably activate the handset 1 for satellite communication, or for a terrestrial cellular system such as GSM communication, DCS communication, DAMPS or PCS communication. Each of these services, being selectable as the service relating to the exemplary cellular radio telephone services 19, 21 of figure 1, operates on its own individual frequency. While, for example, satellite communications have been allocated a band where transmission occurs between the frequencies of 1985 MHz and 2015 MHz and reception occurs between the frequencies of 2170 MHz and 2200 MHz, by contrast GSM communications occur on a band of frequencies close to 900 MHz, DCS communications occur on a band of frequencies close to 1800 MHz and PCS communications occur on a band of frequencies close to 1900 MHz. It is not important to the present invention which of the available terrestrial cellular radio telephone services is present as the "home" service 19, it simply being necessary that at least one such service is selectable on the handset 1. The handset 1 operates with these and other selectable services using the common antenna 27 for all of the services.

The antenna 27, shown in Figure 2, for sake of example, is of the type described in published European Patent Application 0715369A1, entitled "A Multi-Band Antenna System", capable of operating on a plurality of frequency bands, including satellite bands. The particular form of the antenna 27 is not important to the present invention, the present invention merely requiring that the handset 1 is capable of dual or multiple mode operation as hereinbefore and hereinafter described. Those, skilled in the art, will be aware of other ways in which an antenna 27, or more than one antenna 27, can be employed to create the necessary function.

The handset 1 further comprises a slot 39 for receiving a subscriber identity module or SIM card 41 as indicated by a first arrow 43. The SIM card 41, as is known in the art, comprises microprocessing capability together with random access memory and read-only memory to execute various identity functions for the handset 1.

In particular, the SIM card 41 includes a unique identifier, known as the "International Mobile Subscriber Identity" (abbreviated to IMSI), together with a hidden verification key and an encryption algorithm which may, together, be used to verify the identity of the SIM card 41 during registration with a particular service. It suffices for the present invention that a verifiable unique identity exists for the SIM card 41. The SIM card 41 is removable and may, in general, be transferred to other handsets 1, conferring the unique identity thereon. No two valid SIM cards 41, at the time of this invention, have the same IMSI.

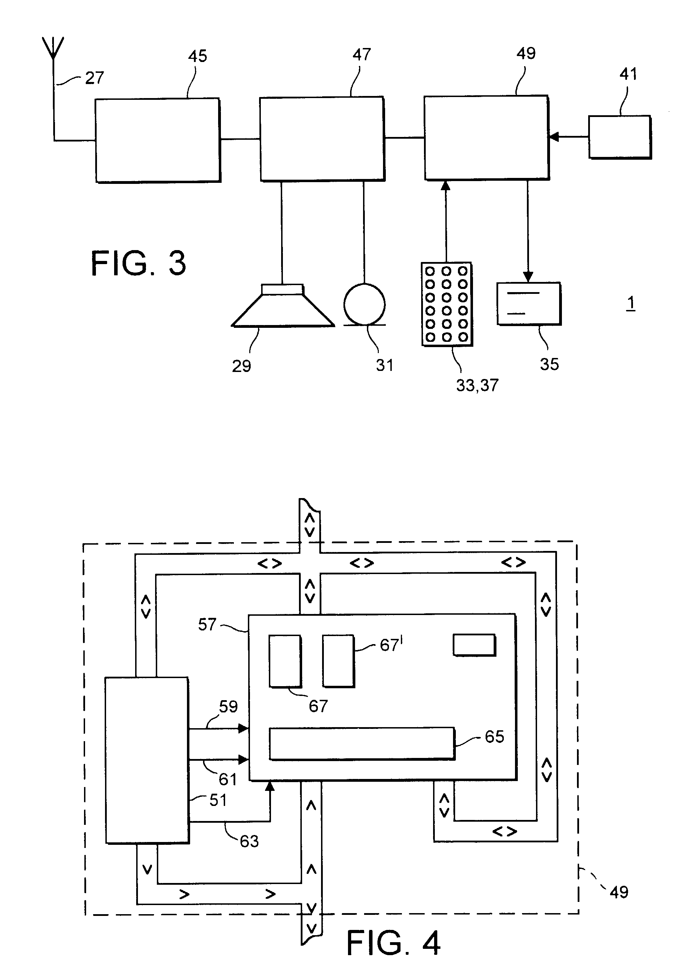

Figure 3 is a schematic diagram showing the functional elements within the handset 1.

Radio signals are sent to and received from the antenna 27 by an adaptable radio frequency section 45, capable of operation in more than one mode, that is to say, capable of interacting with the satellite service 3 5 13 and with one of the other services 19 21, such as those mentioned above. Modulating signals are sent to the radio frequency section 45 and demodulated signals are received from the radio frequency section 45 by a signal processing unit 47 which sends audio signals to the earpiece 29 and receives audio signals from the microphone 31. The entire handset 1 is under control of a controlling processor 49 which operates and receives instructions from the keyboard 33 37 and operates the display 35. The controlling processor 49 supervises and controls the signal processing unit 47 and the radio frequency section 45. In addition, the controlling processor 49 is connected to the SIM card 41 to interact therewith. The exact nature of the control and various elements 45 47 49 41 is not important. Those, skilled in the art, will know various ways in which such structures and elements can be implemented. For the present invention, it is simply sufficient that the elements 45 47 49 41 are capable of operating in the manner hereinbefore and hereinafter described.

Figure 4 is a schematic block diagram of the various elements of the controlling processor 49 shown in Figure 3. A central processing unit 51 provides an address bus 53 and a data bus 55 not only to monitor and control the rest of the handset 1 by provision of instructional data thereon to the elements 45 47 49 at specific addresses, or by using specific addresses for the acquisition of data form the elements 45 47 49, but also provides the data bus 55 and the address bus 53 to a memory 57 which can comprise a combination of random access memory and read-only memory. In addition to the address bus 53 and the data bus 55, the central processing unit 51 also provides a read line 59, a write line 61, and a clock line 63 to the memory 57. Data is deposited in the memory 57 from the data bus 55, at the address specified by the address bus 53, when the write line 61 is activated and a clock signal is provided on the clock line 63. Data is extracted from the memory 57 and provided on the data bus 55 from the address specified by the address bus 53 when the read line 59 is activated and a clock signal is provided on the clock line 63.

The contents of the memory 57 are schematically represented by a fixed programme 65 which determines the fixed and invariable behaviour of the handset 1, together with a number of selectable programme areas 67 67' which can individually or plurally be accessed to determine the behaviour of the handset 1 dependently on which service is selected.

Each of the selectable programme areas 67 67' contains a set of commands, for use by the controlling processor 49, to cause the handset 1 to adhere to a set of rules appropriate for interacting with a selectable one of the services 19 21 3 5 13 offered on the overall communications system.

Additionally to the elements shown, in accord with the present invention, there is also provided a satellite system identifier 69 which is simply a code word, used as an equipment identifier, installed in the user terminal 1 at the time of manufacture, modification or issue, which can be identified by the satellite communications service 3 5 13 . While the satellite system identifier 69 is here shown as being integral with the memory 57, it can equally be provided as a pre-programmed memory chip, a field fusible or programmable logic array, a pattern on the printed circuit board, or whatever can be envisaged according to the presently known art. It is only necessary, for the practise of the present invention, that the central processing unit 51 should be able to read and acquire the code word 69 when necessary.

The satellite system identifier 69 can contain the same code word for every handset 1, merely being indicative of handset equipment compatibility with the satellite system. That is to say, although each handset 1 contains, in use, a SIM card 41, no two of which have the same identification number (IMSI), each and every dual mode handset 1 can have the same satellite system identifier 69. When there is only one satellite system identifier 69 for every handset 1, the satellite system identifier 69 serves, as is hereinafter described, to indicate to the satellite system 3 5 13 that the handset 1 equipment is capable of operation therewith.

Equally, there can be a number of different satellite system identifiers 69, dependent upon the exact style and model of handset 1, such that the satellite system 3 5 13 can readily identify the strengths and limitations of the handset and adapt the exact protocol, used to interact with the handset 1, to match the precise style of handset. As will later be described, this can be important when using the display 35 of the handset to pose questions to the user and when receiving responses back from the handset 1 keyboard or keypad 33, all during interaction to establish the basis for proceeding with a communication. Different styles of handset 1 can have different interactive sequences.

In the final extreme, the satellite system identifier 69 can be different for every handset 1 thereby giving, in addition to the unique identifier, the IMSI, from the SIM 41, a similar unique identity for the handset 1, which can be used as a substitute for the IMSI.

The user of the handset 1 will normally employ it to use one of the terrestrial cellular telephone networks 19 21. Under certain circumstances, described above, the user may chose, instead, to employ the satellite network 3 5 13. In order so to do, the user selects the satellite button in the service selection buttons 37 which causes the handset to revert to the satellite frequency or frequencies, register and verify with the satellite system 3 5 13 via the satellite earth station 5 according to the information on the SIM card 41, and, at the same time, send the satellite system identifier 69 to the satellite earth station 5.

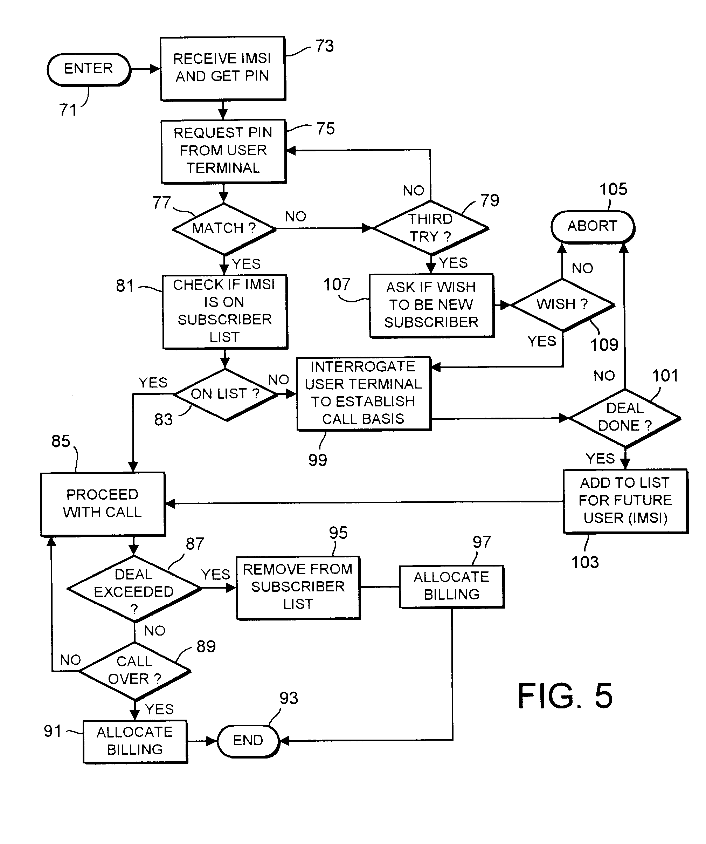

Figure 5 is a flow chart of the activities of the satellite earth station 5 during such call set-up and subsequent activity.

Entry 71 is to a first activity 73 where the satellite earth station 5 receives the IMSI, stored on the SIM card 41 in the handset 1, and looks up a table to retrieve a personal identifier in the form of a "Personal Identification Number" (PIN) which should accompany the IMSI. In the situation where it is elected that each satellite system identifier, in each handset 1, is unique, so that no two handsets have the same satellite system identifier, the satellite system identifier, in this activity, can be accepted instead of the IMSI. Where there are potential multiple users of the handset 1, there may be more than one PIN associated with each IMSI, the intention being that there should be one PIN for each individual user, that being achieved as hereinafter described.

Having retrieved one or more PIN numbers from its table, control passes to a second activity 75 where the satellite earth station 5 proceeds to signal back to the handset 1, instructing the handset 1 to request the PIN number from the user. The handset 1 responds by the controlling processor 49 providing appropriate indication on the display 35 and accepting a sequence of keystrokes from the keyboard 33. The handset 1 sends the result of the keystrokes back to the satellite earth station 5.

Control then passes to a first test 77 where the satellite earth station 5 checks to see if the PIN, provided from the user terminal 1, corresponds with the PIN recovered from the table of PIN numbers relating to the IMSI from the SIM card 41. If no match is found, control passes to a second test 79 which checks to see how many times the user has attempted to enter the PIN from the user terminal 1. If fewer than a predetermined number of tries have been attempted (in this example three tries), the second test passes control back to the second activity 75 for another attempt at PIN entry from the handset 1.

If the first test 77 detects a match between the PIN, recovered from the IMSI table in the satellite earth station 5, control passes to a third activity 81 which checks to see if the IMSI on the handset 1 SIM card 41 is on a subscriber list.

According to current GSM practise, the IMSI comprises a plurality of decimal digits, including a three-digit mobile country code, indicating the country of origin of the SIM card 41, and a three-digit mobile network code, indicating the identity of the supplier of the home network system 19. The satellite earth station 5 examines these fields to determine if the satellite system 3 5 13 has an agreement with the individual terrestrial cellular radio telephone service 19 provider. If an agreement exists, it is flagged. IT may be a simple bill-back agreement where the user has unlimited access to the satellite system 3 5 13, being billed via his or here home network provider 19. Alternatively, there may be some monetary or time usage limit in the agreement. These, too, will be flagged.

It may also be that the user is, in some other way, a direct subscriber to the satellite service 3 5 13. In this instance, the third activity 81 will pick up the fact that the user has independent access and independent billing to the satellite service. The direct subscription can be achieved by formal application, or by instant application, as is hereinafter described.

A second test 83 detects whether or not the user was detected as an existing subscriber by the third activity 81. If the user is on the existing subscriber list, control is then passed to a fourth activity 85 which proceeds with the required call activity which the subscriber or user desires.

A third test 87 monitors the progress of the fourth activity 85 to see if any of limitations, placed on satellite system 5 3 13 access by the nature of the arrangement that the user, or the user's home system 19, may have with the satellite service 3 5 13. As earlier stated, there may be a limit on the total amount of money that the user can spend on the satellite system 3 5 13. Likewise, there may be a limit on the amount of time or the number of calls or call attempts the user may employ. The limitations are various. As will later be described, the user himself may impose his own limitations. In any event, the third test 87 monitors the progress of the call to see if any limitations have been exceeded.

If no limitations have been exceeded, a fourth test 89 next monitors the progress of the call to see if it is still in progress. If the call is still in progress, control passes back to the fourth activity 85.

If the fourth test 89 detects that the call has terminated, control passes to a fifth activity which, using the details from the subscriber list found in the third activity 81, calculates the billing and sends it either to the home service system 19, some other system as specified in the subscriber list, or into the satellite system 3 5 13 accounts system. In addition, time and/or cash, actually used, are deducted from any limits which have been set for the particular user, residues being available for later use on another occasion.

Control then passes to a termination 93 where the contact with the user terminal or handset 1 is ended in an orderly manner.

If the third test 87 detects that the terms of the usage arrangement for the user have been exceeded, control passes to a sixth activity 95 where the instant access of the user, to the satellite system 3 5 13, is ended. If the overall deal is finished, and a new arrangement needs to be struck between the user and the satellite service 3 5 13, the particular subscriber or user is removed from the subscriber list. If more than one PIN is listed for a particular IMSI, only that PIN is removed. If an IMSI has only one PIN, both the IMSI and the PIN are removed.

Control then passes to a seventh activity 97 which allocates billing, just like the fifth activity, control then passing to the terminator 93.

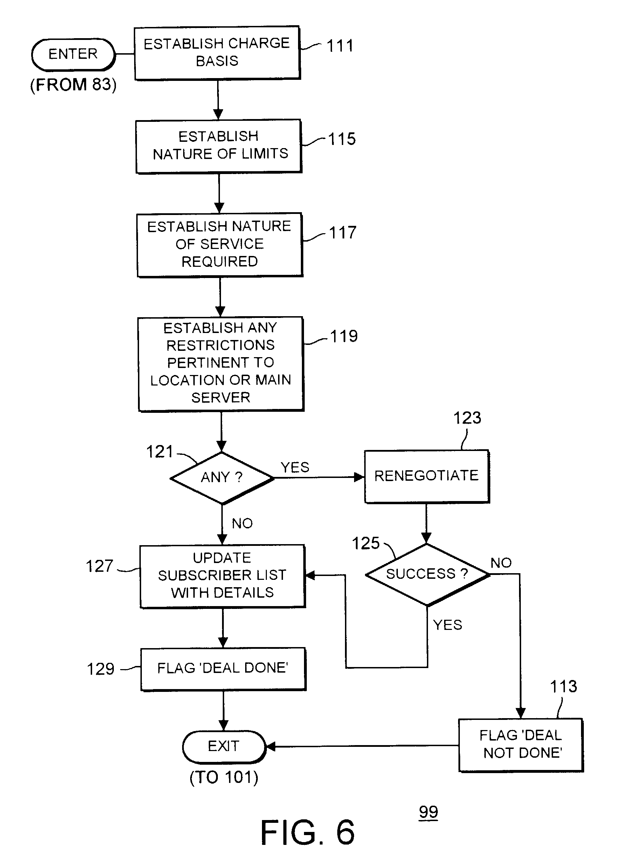

If the second test 83 finds that the user is not on the subscriber list, control passes to an eighth activity 99 where the satellite earth station 5 sends messages to and receives responses from the handset 1 in an attempt to establish a formal relationship between the satellite service 3 5 13 and the user. This activity is described, in greater detail, in relation to Figure 6. If the satellite service 3 5 13 comes to an arrangement with the user (i.e. "makes a deal"), a fifth test 101 recognises the fact and passes control to a ninth activity 103 where the IMSI of the user is added to the subscriber list and the user is allocated his PIN or confirms his own, selected PIN. Control then passes to the fourth activity 85 where the required service is provided, as earlier described.

If the fifth test 101 detects that no deal has been made with the user, control passes to a termination 105 where the whole contact with the handset 1 is terminated.

If the second test 79 detects that the user has failed to enter his PIN number in the predetermined maximum number of attempts, control passes to a tenth activity 107. It may be that the user has forgotten his or her PIN or has been removed from the subscriber list because of exceeding limits. It may be that the user is a naive potential new subscriber. It may even be that the user is a potential fraudulent user. It does not matter what the cause, the tenth activity, noting the failure to find a matching IMSI and PIN, causes the satellite earth station 5 to send messages to and receive messages from the handset 1 for the handset to enquire of the user whether or not the user wishes to become a new subscriber. If a sixth test 109 detects that the user wishes to become a new subscriber, control is passed to the eighth activity 99 which proceeds as previously described. If the sixth test 109 detects that the user does not wish to become a new subscriber, control passes to the termination 105 which ends the proceedings.

Returning briefly to the second activity 75, if no PIN number is stored with IMSI, and the IMSI is not one from a recognised terrestrial cellular radio telephone service provider 21 19 with whom the satellite service 3 5 13 has an agreement for free access, control passes directly to the tenth activity 107 instead of to the first test 77 in an attempt to get the new user to "sign up" and register as a subscriber.

Figure 6 is a flowchart showing, in greater detail, the nature of the eighth activity 99, shown in Figure 5.

Entry, from the second test 83, is to an eleventh activity 111 where the satellite earth station sends messages to the handset 1 and receives responses back from the handset 1 in order to establish the charge basis. The user, on prompt, presses buttons on the keyboard 33, to respond to questions on the display 35. It may be that the user wishes the call to be charged to a credit card, debit card, charge card or some other banking service. Upon adequate indication of the nature of the banking service or card, the satellite earth station 5 verifies the validity of the card or banking service via external agency, as is well known in such transactions. Alternatively, the user may wish to have the call billed back to some provider of terrestrial telephone services 9 11 or terrestrial cellular radio telephone services 19 21. Once again, the satellite earth station 5 checks with the proposed external system to establish if such an arrangement is acceptable. The exchange of details between the user and the satellite earth station can include a host of personal details which are necessary to establish the validity of the proposed transaction.

Should it not be possible to establish a charge basis for use of the satellite system 3 5 13, although not shown in figure 6 as a separate path, exit from the eleventh activity 111 is directly to a twelfth activity 113 which flags the fact that a deal was not done before final exit to the fifth test 101 of figure 5.

It is to be understood, in figure 6, that if any activity requires the establishment of an agreement between the user and the satellite earth station 5, and an agreement cannot be established, an implicit direct exit to the twelfth activity 113 exists.

Once the eleventh activity has established the charge basis of the proposed use of the satellite system 3 5 13, control passes to a thirteenth activity 115 which establishes the nature of any limits that either the user requests or which result from the nature of the charge basis.

Again, by a process of interrogation, the satellite earth station 5 requests the user to indicate whether or not he or she wishes to limit the transaction to a predetermined number of minutes or to some predetermined cost. The satellite earth station 5 also checks with the banking service or the chargeback provider 19 21 9 11 to see if the service provider has some limit of its own which the user cannot exceed. Once the limits have been determined, control passes to a fourteenth activity 117 which establishes exactly what services the user requires.

The satellite system 3 5 13 can offer a number of services, ranging from direct telephone calls to a host of other user services such as data or facsimile transmission and receipt, paging, redirection of calls, and so on. Likewise, the particular user may wish only to make one single call, based on a chargeback or credit card charge basis, or may wish to become a permanent subscriber to the satellite system 3 5 13. or any limitation therebetween. Likewise, the potential subscriber may wish to phone particular countries or access other secondary services from other supplies, but via the satellite system 3 5 13.

Having established what the potential subscriber requires, control passes to a fifteenth activity 119 where the satellite earth station 5 checks to see if there are any restrictions which are at variance with the requirement of the potential subscriber. The satellite earth station 5, at the time that the handset 1 is registered with the satellite system 3 5 13, also becomes aware of the position of the handset 1 on the surface of the earth. It may be, for various fiscal or political reasons, that a handset in one particular territory may be precluded from acquiring services in another territory or from communicating with that other territory. Equally, the chosen method of payment for the potential subscriber may, for similar reasons, not be acceptable from a particular territory. Equally, there may be agreements between service suppliers that some transactions cannot take place. Whatever the reason, the fifteenth activity 119 determines the restrictions, and a seventh test 121 checks to see if any restrictions exist.

If the seventh test 121 finds any restrictions, control is passed to a sixteenth activity 123 where the satellite earth station 5 renegotiates the arrangement by exchanging messages with the handset 1. If an eighth test 125 detects that no compromise arrangement can be found, control is passed to the twelfth activity 113 where it is flagged that no deal is done and control is ultimately passed to the fifth test 101 of figure 6. If the eighth test 125 finds that a compromise arrangement has been reached, control passes to the seventeenth activity 127 where the subscriber details are added to the list of subscribers. Control then passes to an eighteenth activity 129 where it is flagged that "a deal has been done" before ultimate exit to the fifth test 101.

It is to be understood that the handset 1 is representative of just one of a potential large plural set of user terminals, that the satellite 3 is just one of a possible plurality of satellites 3, and that the satellite earth station is just one of a possible plurality of satellite earth stations 5. Likewise, whenever the satellite earth station has hereinbefore been described as performing a particular action, it is to be understood that the actual activity need not be performed at the satellite earth station 5 itself, but can be performed elsewhere, anywhere in the ground portion, the results merely being relayed via the satellite earth station 5.

## Claims

1. A satellite communication system comprising a user terminal and a ground portion, said user terminal being operative to exchange messages with said ground portion through a satellite, said system being characterised by said user terminal comprising an equipment identifier, indicative of compatibility of said user terminal with said ground portion; by said user terminal, at commencement of communication with said ground portion, being operative to send said equipment identifier to said ground portion; by said ground portion being operative to examine said equipment identifier; and by said ground portion being operative to continue said communication if said equipment identifier indicates that said user terminal is compatible with said ground portion.

2. A system, according to claim 1, wherein said user terminal is additionally operative to send, to said ground portion, a unique identifier, indicative of that handset alone from among a set of handsets; wherein said ground station is operative to receive said unique identifier, and, if said equipment identifier indicates compatibility of said handset with said ground portion, to request said user terminal to send, to said ground portion, a personal identifier; wherein said ground portion is operative to examine the received personal identifier; and wherein said ground portion is operative is operative to continue said communication if said received personal identifier matches a stored personal identifier associated with said received unique identifier.

3. A system according to claim 2 wherein said unique identifier is derived from a subscriber identity module.

4. A system, according to claim 2, wherein said unique identifier is integral with said equipment identifier.

5. A system, according to claim 2, 3 or 4 wherein said ground portion is operative to store a plurality of personal identifiers, associated with said unique identifier.

6. A system, according to claim 2, 3, 4 or 5, wherein said ground portion is operative to compare said received unique identifier with a plurality of stored unique identifiers and, if a match is found, to continue said communication on the basis of services, stored in association with that one of said plurality of stored unique identifiers for which a match was found with said received unique identifier.

7. A system according to claim 2, 3, 4 or 5 wherein, in the event that said ground portion cannot find a stored personal identifier which matches a received personal identifier, said ground portion is operative to interact with said user terminal to establish a basis for continued communication, said ground portion, in the event that a basis is found, being operative to allocate a new personal identifier for storage in association with said received unique identifier and indication of said basis.

8. A system, according to claim 7 wherein said interaction includes said ground portion sending messages for display by said user terminal and said user terminal sending, as a response to said ground portion, replies from a keypad on said user terminal.

9. A system, according to any of the preceding claims, wherein said received equipment identifier includes indication of the style of said user terminal, wherein said ground portion is operative to examine said received equipment identifier for indication of said style, and wherein said ground portion is operative to respond to said indication of said style by selecting and utilising that protocol, from among a plurality of protocols, appropriate to said style.

10. A system, according to any of the preceding claims, wherein said user terminal is operative to communicate with at least one non satellite communication system, said user terminal selecting said at least one non-satellite system by default, and selecting said satellite system in response to a command by a user.

11. A method of operating a satellite communication system comprising a user terminal and a ground portion, said user terminal being operative to exchange messages with said ground portion through a satellite, said method being characterised by comprising the steps of: allocating, to said user terminal comprising an, equipment identifier, indicative of compatibility of said user terminal with said ground portion; said user terminal, at commencement of communication with said ground portion, sending said equipment identifier to said ground portion; said ground portion examining said equipment identifier; and said ground portion continuing said communication if said equipment identifier indicates that said user terminal is compatible with said ground portion.

12. A method, according to claim 11, including the steps of said user terminal sending, to said ground portion, a unique identifier, indicative of said handset alone from among a plural set of handsets; said ground station receiving said unique identifier, and, if said equipment identifier indicates compatibility of said handset with said ground portion, requesting said user terminal to send, to said ground portion, a personal identifier; said ground portion examining the received personal identifier; and said ground portion is continuing said communication if said received personal identifier matches a stored personal identifier associated with said received unique identifier.

13. A method according to claim 11 wherein said unique identifier is derived from a subscriber identity module.

14. A method, according to claim 11, wherein said unique identifier is integral with said equipment identifier.

15. A method, according to claim 11, 12, 13 or 14 including the step of said ground portion storing a plurality of personal identifiers, associated with said unique identifier.

16. A method, according to claim 11, 12, 13, 14 or 15, including the steps of said ground portion is comparing said received unique identifier with a plurality of stored unique identifiers and, if a match is found, continuing said communication on the basis of services, stored in association with that one of said plurality of stored unique identifiers for which a match was found with said received unique identifier.

17. A method according to claim 11, 12, 13, 14 or 15, including the steps of, in the event that said ground portion cannot find a stored personal identifier which matches a received personal identifier, said ground portion interacting with said user terminal to establish a basis for continued communication, said ground portion, in the event that a basis is found, allocating a new personal identifier for storage in association with said received unique identifier and indication of said basis.

18. A method, according to claim 17 wherein said interaction includes said ground portion sending messages for display by said user terminal and said user terminal sending, as a response to said ground portion, replies from a keypad on said user terminal.

19. A method, according to any of claims 11 to 18, wherein said received equipment identifier includes indication of the style of said user terminal, said method including the steps of said ground portion examining said received equipment identifier for indication of said style, and said ground portion responding to said indication of said style by selecting and utilising that protocol, from among a plurality of protocols, appropriate to said style.

20. A method, according to any of the claims 11 to 19, wherein said user terminal is operative to communicate with at least one non satellite communication system, said user terminal selecting said at least one non-satellite system by default, and selecting said satellite system in response to a command by a user.

21. A user terminal for a satellite communication system that includes a ground portion, said user terminal being operative to exchange messages with said ground portion through a satellite, characterised by said user terminal including an equipment identifier, indicative of compatibility of said user terminal with said ground portion; and being operative at commencement of communication with said ground portion, to send said equipment identifier to said ground portion; whereby said ground portion may examine said equipment identifier and continue said communication if said equipment identifier indicates that said user terminal is compatible with said ground portion.
